Europäisches Patentamt

(19) European Patent Office

Office européen des brevets

(11) Veröffentlichungsnummer: **0 003 956**
**A2**

(12) **EUROPÄISCHE PATENTANMELDUNG**

(21) Anmeldenummer: 78200081.4

(51) Int. Cl.²: **A 47 J 19/02**

(22) Anmeldetag: 05.07.78

(30) Priorität: 10.03.78 DE 2810340

(43) Veröffentlichungstag der Anmeldung:
19.09.79 Patentblatt 79/19

(84) Benannte Vertragsstaaten:
CH FR GB NL SE

(71) Anmelder: Hottenroth, Eberhardt
St.Peter Weg 2
D-7336 Uhingen 1-Nassach(DE)

(72) Erfinder: Hottenroth, Eberhardt
St.Peter Weg 2
D-7336 Uhingen 1-Nassach(DE)

(74) Vertreter: Schön, Theodor

D-8311 Thürnthenning 98(DE)

(54) Handgerät zum Gewinnen und dosierten Ausgeben von Fruchtsäften.

(57) Handgerät zum Gewinnen und dosierten Ausgeben von Fruchtsäften, insbesondere von Zitrusfrüchten, bestehend aus einem über einen Teil seiner Länge hin mit einem Schraubgewinde und oval geformten radialen Safteintrittsöffnungen versehenen, beidendig offenem Fruchtabohrrohr, einer am Ende des Anbohrrohres angeordneten Anpreßfläche für die Frucht und einem durch einen Klappdeckel verschließbaren Saftsammelbehälter, wobei das freie Ende des Fruchtanbohrrohres mit einer axial gerichteten Stirnverzahnung versehen ist und das sich zum Saftsammelbehälter hin konisch erweiternde Fruchtanbohrrohr mit dem im wesentlichen zylindrischen Saftsammelbehälter einteilig und koaxial ausgebildet ist und wobei eine unabhängige, mit einer Abstellfläche oder einem Abstellrand versehene Abstellschale, die die freie Seite der auf der anderen Seite das Fruchtanbohrrohr samt Sammelbehälter tragenden Frucht nach Art eines an sich bekannten Eierbechers aufnimmt, vorgesehen ist.

FIG.3

EP 0 003 956 A2

Eberhard Hottenroth
St. Peter- Weg 2

7336 Uhingen 1 - Nassau

## Handgerät zum Gewinnen und dosierten Ausgeben von Fruchtsäften

Die Erfindung bezieht sich auf ein Handgerät zum Gewinnen
und dosierten Ausgeben von Fruchtsäften, insbesondere von
Zitrusfrüchten, bestehend aus einem über einen Teil seiner
Länge mit einem Schraubgewinde und radialen Safteintrittsöffnungen versehenen beidendig offenen Fruchtanbohrrohr,
einer am einen Ende des Fruchtanbohrrohres angeordneten
Anpreßfläche für die Frucht und einem Saftsammelbehälter,
wobei das freie Ende des Fruchtanbohrrohres mit einer axial
gerichteten Stirnverzahnung versehen ist.

Handgeräte zum Gewinnen von Saft aus Zitrusfrüchten, welche
im wesentlichen aus einem Fruchtanbohrrohr bestehen, sind
aus einer Vielzahl von Druckschriften, beispielsweise der
DE-PS 66o 153 oder der FR-PS 1 1o3 217 bekannt. In beiden
Fällen besteht das Handgerät aus einem einteiligen, mit
radialen Öffnungen sowie einem Gewinde versehenen Fruchtanbohrrohr, welches in die Frucht eingesteckt bzw. eingeschraubt werden kann und in diesem Zustand als Leitungsweg
für den aus der Frucht ausgepreßten Saft dient. Bei dem
Fruchtanbohrrohr nach der FR-PS 1 1o3 317 ist an dem in
die Frucht eindringenden Ende des Fruchtanbohrrohres darüber
hinaus noch eine das Anbohrrohr radial überragende Schneidvorrichtung zum Zerkleinern des Fruchtfleisches vorgesehen.
Das Entsaften der Frucht erfolgt hierbei regelmäßig über ein
manuelles Zusammendrücken der Frucht, so daß der Saft des
Fruchtfleisches über dessen radiale Öffnungen in das Fruchtanbohrrohr gelangt und in diesem zu der Ausgießöffnung geführt wird. Diese bekannten Einrichtungen zum Gewinnen von
Fruchtsäften, insbesondere aus Zitrusfrüchten, gestatten es,
den jeweils augenblicklich durch Zusammendrücken der Frucht gewonnenen Saft über das Anbohrrohr auszugießen, wobei die Gestaltung
der Öffnungen des Fruchtanbohrrohres eine gewisse Siebwirkung gegen
das Mitführen von Teilen des Fruchtfleisches im Saft ermöglicht.
Bei einem weiteren bekannten Handgerät zum Gewinnen von Saft aus
Zitrusfrüchten (DT-AS 1 260 715 ) ist das Fruchtanbohrrohr durch
entsprechend einem Rohrumfang angeordnete Federmesser gebildet,
welche in die Frucht eingestochen werden können und ist ferner
am unteren Ende dieses durch Federmesser gebildeten Fruchtanbohrrohres ein Fruchtanpreßteller vorgesehen, an den sich ein zentral
angeordnetes Saftablaufrohr anschließt. Die Fruchtsaftgewinnung
erfolgt hierbei in gleicher Weise durch Zusammendrücken der
Zitrusfrucht, wobei die das Anbohrrohr bildenden Messerklingen
gegen die Kraft ihrer Federwirkung zusammengedrückt werden und
durch Zerkleinerung des Fruchtfleisches eine größere Fruchtsaftausbeute erbringen sollen. Gemäß einigen der Ausführungsformen
der im wesentlichen auf die Ausbildung des Anbohrrohres als
federnde Messerklingen ausgerichteten DE-AS 1 260 715 ist dem
Fruchtanbohrrohr an Stelle eines Anpreßtellers ein als offene
Schale ausgebildeter Saftsammelbehälter nachgeordnet.
Allen diesen bekannten Einrichtungen ist gemeinsam, daß die zu
entsaftende Zitrusfrucht mittels des Anbohrrohres angebohrt bzw.
über den größeren Teil ihrer Dicke hin durchstochen wird und der
aus dem Fruchtfleisch ausgepreßte Saft teils über das Anbohrrohr oder teils über die dieses bildenden Messerklingen einem
Ablaufrohr oder dergl. zugeleitet werden, so daß auf der einen
Seite nur die dem jeweils angewandten Preßdruck entsprechende
Saftmenge aus der Frucht gewonnen werden kann und sich auf der
anderen Seite aufgrund des angewandten Preßdruckes stets eine
gewisse Menge aus der Schale ausgepreßten Saftes ergibt, welche
unter den heutigen Verhältnissen stets eine gewisse Menge
chemischer Konservierungsmittel, wie sie üblicherweise nachträglich
auf die Frucht aufgespritzt oder aufgesprüht werden, enthält und
entweder durch den aus dem Fruchtfleisch gewonnenen Saft mitgespült oder aber durch Ablaufen entlang der Oberfläche der zu entsaftenden Frucht mit dem aus dem reinen Fruchtfleisch gewonnenen
Saft vermischt wird. Nachdem davon auszugehen ist, daß Zitrusfrüchte gleich welcherHerkunft, allgemein mit einem gesundheitsschädlichen Konservierungsmittel besprüht werden, bevor
sie zum Versand bzw. Verkauf gelangen, ist es im Prinzip
gleichgültig, auf welche Weise der durch die Poren der
Schale der Zitrusfrucht austretende Saft sich mit dem aus
dem reinen Fruchtfleisch gewonnenen Saft verbindet, da
in jedem Falle das Mitspülen von Konservierungsmitteln
in den zum menschlichen Verzehr bestimmten Saft unerwünscht ist.

Ein weiterer Nachteil der bekannten Handgeräte zum Gewinnen
von Fruchtsaft aus Zitrusfrüchten besteht darin, daß
sie keine Saftspeicherungsmöglichkeit besitzen, als jeweils der den auf die Zitrusfrucht ausgeübten Preßdruck
entsprechende Saftanteil durch das Anbohrrohr ausfließt.
Die dem auf die Zitrusfrucht ausgeübten Preßdruck
entsprechende Saftmenge hängt aber in einem sehr großen
Umfang davon ab, ob es sich um eine frisch angebohrte
Frucht handelt oder ob die Frucht schon mehrfach ausgepreßt worden ist. Demzufolge kann der normale Benutzer
eines solchen Handgerätes auch die gewünschte Saftmenge
nicht exakt dosieren, zumal er in aller Regel keine
Kenntnis davon hat, ob es sich um eine frisch angebohrte
oder bereits mehrfach ausgepreßte Frucht handelt. Dies
ist insbesondere dort von Wichtigkeit, wo solche Handgeräte zum nachträglichen Würzen von Speisen, beispielsweise
Fisch oder Fleisch eingesetzt werden. Auch bei der
individuellen Zubereitung von Salat oder dergl. werden
derartige Handgeräte verwendet, um dem jeweiligen Gast
die Möglichkeit zu einer persönlichen Abstimmung des
Geschmackes des Salates zu geben.

Aus den vorstehend aufgezeigten Gegebenheiten resultiert
die Aufgabe ein Handgerät zum Gewinnen von dosierten
Ausgeben von Fruchtsäften, insbesondere von Zitrusfrüchten,
zu schaffen, welches es ermöglicht, den Fruchtsaft einerseits aus der Zitrusfrucht zu gewinnen, und andererseits
zu bevorraten, so daß er unabhängig vom Auspreßzustand
der Frucht in beliebigen Mengen dosiert abgegeben werden
kann. Eine Vorrichtung, die diese Ansprüche im allgemeinen erfüllt, ist aus der US-PS 3 073 237 bekannt. Bei dieser
bekannten Vorrichtung ist ein mit einem Fruchtanpreßteller
kombiniertes Anbohrrohr, welches seitliche Safteintrittsöffnungen aufweist, vorgesehen, und wird von einem Saftableitungsrohr, welches seinerseits einerseits mit einem
Saftvorratsbehälter und andererseits mit einer Ausgießöffnung
verbunden ist, durchsetzt. Das Saftableitungsrohr ist dabei
innerhalb des Anbohrrohres axial verschieblich und kann zusammen
mit dem Vorratsbehälter durch die Zitrusfrucht hindurchgestoßen werden, so daß an seinem freien Ende eine Ausgießöffnung angebracht werden kann, über welche der gewonnene
Saft in dosierten Mengen ausgegeben wird. Dieses bekannte
Handgerät zeichnet sich insbesondere dadurch aus, daß es aus
einer großen Anzahl von Einzelteilen besteht, deren Zusammenbau
einen erheblichen Aufwand erforderlich macht. Weiterhin
bietet dieses bekannte Handgerät keine Gewähr dafür, daß
aus der Fruchtschale austretender Saft nicht mit dem Saft des
reinen Fruchtfleisches vermischt wird, so daß in den zum
menschlichen Verzehr bestimmten Fruchtsaft auch von der Fruchtschale abgespülte, hochgradig giftige Konservierungsmittel
enthaltende Saftanteile eingebracht werden.

Ausgehend von diesem Stande der Technik liegt der Erfindung
die Aufgabe zugrunde ein insbesondere einhändig bedienbares
Handgerät zum Gewinnen und vor allem dosierten Ausgeben
von Fruchtsaft, speziell dem Saft von Zitrusfrüchten zu
schaffen, welches einerseits aus einer geringstmöglichen Anzahl
von Bestandteilen besteht und in Automaten, vorzugsweise
ausDruckguß oder Kunststoff herstellbar ist, andererseits
das Gewinnen einer optimalen Saftmenge ausschließlich aus dem
Fruchtfleisch einer Zitrusfrucht sowie ein dosiertes Ausgeben
einer Teilmenge des gewonnenen Saftes bzw. Saftvorrates
ermöglicht und welches schließlich die Vermeidung einer
Vermischung des Fruchtfleischsaftes mit dem beim Auspressen
der Frucht austretenden, Konservierungsmittel ausspülenden
Schalensaft · gestattet. Ferner liegt der Erfindung die
Aufgabe zugrunde eine Einrichtung zu schaffen, die ein
Abstellen des in eine Frucht eingeführten Handgerätes mit
wenigstens teilweise gefülltem Saftsammelbehälter erlaubt.

Diese Aufgabe wird erfindungsgemäß im wesentlichen
dadurch gelöst, daß an das Fruchtanbohrrohr ein
Saftsammelbehälter einteilig und zum Fruchtanbohrrohr
koaxial ausgerichtet angeschlossen ist. Der Fruchtsammelbehälter ist dabei im wesentlichen zylindrisch gestaltet,
während sich das Fruchtanbohrrohr zum Sammelbehälter
hin konisch erweitert und im Übergangsbereich zum Saftsammelbehälter ein lediglich eine Windung aufweisendes
Schraubgewinde großer Steigung aufweist. In Verbindung mit
der Anordnung eines Ausgießschnabels am Saftsammelbehälter und der Anwendung eines die Öffnung des Saftsammelbehälters verschliessenden Deckels ermöglicht es
das erfindungsgemäße Handgerät alle den bekannten Handgeräten ähnlicher Art anhaftenden Nachteile zu vermeiden.
Zunächst gestattet die einteilige Ausbildung von Fruchtanbohrrohr und Saftsammelbehälter die einfachste und
auf Automaten herstellbare Form eines Handgerätes
zum Gewinnen von Saft aus Zitrusfrüchten, wobei die Anordnung eines Saftsammelbehälters gleichzeitig ein
dosiertes Ausgeben des jeweils gewonnenen Fruchtsaftes,
unabhängig vom Auspreßzustand der Frucht ermöglicht.
Da in Folge der konischen Gestaltung des Anbohrrohres eine
Dichtwirkung zwischen der Fruchtschale und dem Anbohrrohr,
durch welches der aus dem reinen Fruchtfleisch gewonnene
Saft in den Sammelbehälter abfliessen kann, erzielt wird,
ist auch jegliche Vermischung des beim Zusammenpressen
der Frucht anfallenden Schalensaftes mit dem zum
menschlichen Verzehr bestimmten Saft ausgeschlossen.
Durch den gemäß einem weiteren Merkmal der Erfindung im
Übergangsbereich zwischen Anbohrrohr und Saftsammelbehälter vorgesehenen radialen Kragen wird weiterhin verhindert, daß aus der Fruchtschale austretender mit
Konservierungsmitteln versetzter Saft sich mit dem aus dem
reinen Fruchtfleisch gewonnenen Saft vermischen kann.

Gemäß einer weiteren Ausgestaltungsform der Erfindung
kann vorgesehen sein, daß der Saftsammelbehälter an seiner
freien Endseite mittels eines klappbaren Deckels
verschließbar ist und ferner, daß im Übergangsbereich

zwischen Anbohrrohr und Saftsammelbehälter ein Fruchtanpreßteller aufsetzbar ist.

Schließlich kann weiterhin vorgesehen sein, daß dem
Handgerät eine Abstellvorrichtung zugeordnet ist, welche
es gestattet, das Handgerät samt angebohrter Zitrusfrucht
auf einem Tisch oder dergl. abzustellen, ohne daß die
Gefahr besteht, daß der teilweise gefüllte Saftsammelbehälter ausläuft. Dies wird erfindungsgemäß dadurch
bewerkstelligt, daß dem Handgerät eine Abstellschale
zugeordnet ist, welche vorzugsweise spiegelbildlich zu
einem Fruchtanpreßteller ausgebildet sein kann und mit
einer Abstellfläche oder einem Abstellrand versehen ist,
welche bzw. welcher das kippsichere Abstellen einer mit einem
erfindungsgemäßen Handgerät versehenen Zitrusfrucht ermöglicht. Die Abstellschale kann dabei auch die Form eines
wohlbekannten Eierbechers haben und neben einer Aufnahmeschale für die Zitrusfrucht eine eine stabile Abstützfläche
bildende Unterschale besitzen.

Ein besonderer Vorteil des erfindungsgemäßen Gerätes
wird darin gesehen, daß es in einem Spritzgußverfahren
sowohl aus Metall als auch aus Kunststoffmaterial hergestellt werden kann, wobei ein aus Kunststoffmaterial hergestelltes Gerät dieser Art mit einer Verchromung versehen
wird.

Weitere vorteilhafte Einzelausgestaltungen der Erfindung
ergeben sich aus den weiteren Unteransprüchen.

Die Erfindung ist in der nachfolgenden Beispielsbeschreibung an Hand eines in der Zeichnung dargestellten
Ausführungsbeispieles im einzelnen beschrieben.
In der Zeichnung zeigt die

Figur 1   eine teilweise aufgebrochene Seitenansicht
          eines erfindungsgemäßen Handgerätes;

Figur 2   eine um 90° gedrehte Seitenansicht eines
          erfindungsgemäßen Handgerätes gemäß Figur 1;

Figur 3     eine Seitenansicht eines mit einem Fruchtanpreßteller versehenen, erfindungsgemäßen Handgerätes ;

Figur 4     eine Schnittdarstellung eines erfindungsgemäßen
Handgerätes gemäß den Figuren 1 bis 3 samt einer
ihm zugeordneten Abstelleinrichtung.

Mit dem Anbohrrohr 1 ist einteilig und koaxial ein Saftsammelbehälter 2 ausgebildet. Der Saftsammelbehälter 2 ist im
wesentlichen zylindrisch gestaltet, während das Anbohrrohr
1 ausgehend von seinem Anschluß an den Saftsammelbehälter 2
zu seinem freien Ende hin konisch verjüngt ist.
An seinem freien Ende weist das Anbohrrohr eine axial
gerichtete Stirnverzahnung 3 auf, in deren Bereich es
hinsichtlich seiner Wandungsdicke derart verjüngt ist, daß
es eine Art Schneide 4 bildet. In seinem dem Saftsammelbehälter 2 benachbarten Bereich ist das Anbohrrohr 1 weiterhin
mit einem lediglich einen Gewindegang aufweisenden,
nach aussen vorragenden Schraubgewinde 5 versehen. Das
Schraubgewinde 5 weist eine große Steigung auf, so daß es
leicht in die zu entsaftende Frucht einschraubbar ist.
In seinem zwischen dem Schraubgewinde 5 und der Stirnverzahnung 3 liegenden Bereich ist das Fruchtanbohrrohr 1
mit großen, ovalen und einander gegenüberliegend angeordneten
Safteintrittsöffnungen 6 versehen. Die Seitenwandungen 7
der Safteintrittsöffungen 6 sind tangential zur Längsachse
des Anbohrrohres 1 abgeschrägt, so daß ihre äußeren
Kanten 8 als Bohrschneiden wirken. Im Übergangsbereich
zwischen dem Anbohrrohr 1 und dem Saftsammelbehälter 2
ist eine dem größten Durchmesser des Fruchtanbohrrohres 1
gegenüber einen vergrößerten Durchmesser aufweisende
Zylinderfläche 9 angeordnet, welche zum Umfang des Fruchtanbohrrohres 1 hin in einer steil geneigten Fläche 1o abfällt. Die Zylinderfläche 9, welche unmittelbar an einen
radial ausladenden Kragen 11 anschließt, dient dazu, auf
das Handgerät einen Fruchtanpreßteller 12 aufzuklipsen.
Der Fruchtanpreßteller 12 weist eine im allgemeinen
konische Querschnittsform auf und ist in seinem zentralen

0003956

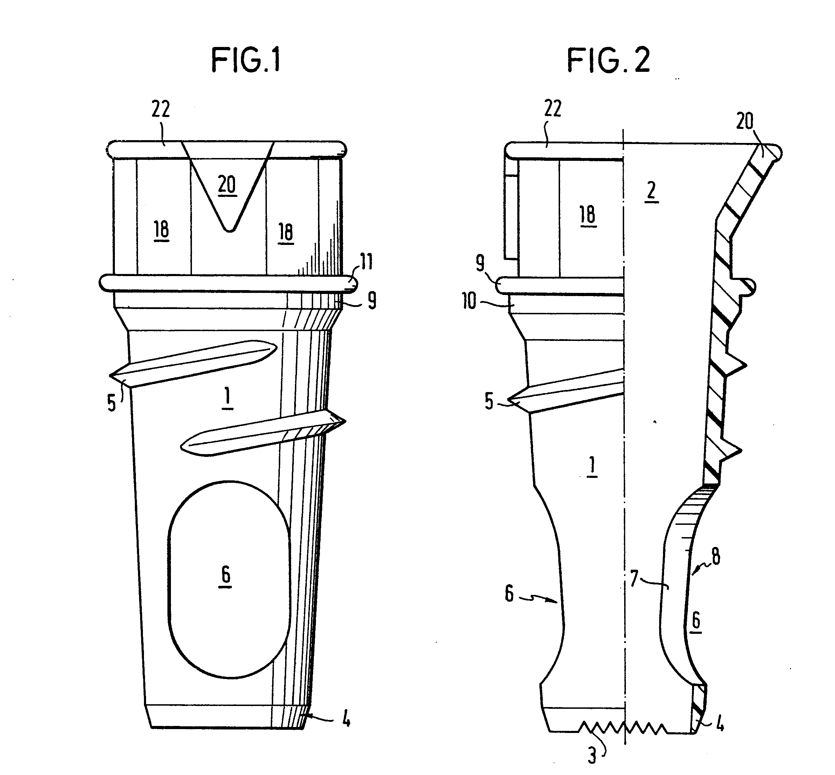

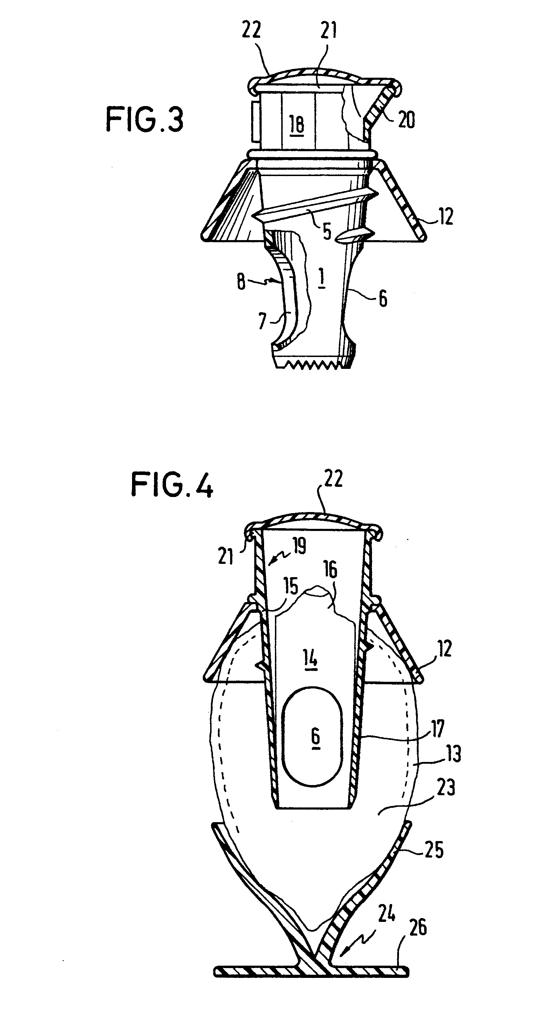

Bereich mit einer Ausnehmung versehen, über welche er
unter federnder Erweiterung seiner Ausnehmungsränder
auf die Zylinderfläche 9 aufgeschoben werden kann.
Der Fruchtanpreßteller 12 wird daher durch Aufklipsen
auf die Zylinderfläche 9 an dem erfindungsgemäßen
Handgerät befestigt. Der radiale Kragen 11 ist jedoch so
ausgelegt, daß die Anwendung eines Fruchtanpreßtellers 12
für die Verwendung des erfindungsgemäßen Handgerätes
nicht unbedingt erforderlich ist, sondern auch der radial
auskragende Kragen 11 eine Abweisfläche für den aus der
Schale der Frucht austretenden und mit chemischem
Konservierungsmittel versetzten Schalensaft dient. Die
Konizität des Fruchtanbohrrohres 1 bewirkt auf der einen
Seite eine dichtende Anlage der Fruchtschale 13 an dem
voll eingeführten Anbohrrohr 1 und auf der anderen Seite
die Schaffung eines Hohlraumes zwischen dem Kern 14
der angebohrten Frucht und den Innenumfangsflächen 15
des Anbohrrohres, durch welche der durch Auspressen der
Zitrusfrucht gewonnene Fruchtfleischsaft ausfliessen kann,
ohne dabei die Oberflächen 16 des vom Anbohrrohr 1
umgriffenen Fruchtkernes mehr als nötig zu umspülen.
Die in Folge der Konizität des Anbohrrohres 1 erzeugten
Spalte 17 zwischen Bohrkern und Bohrrohr reichen
vollständig aus um den insgesamt aus dem Fruchtfleisch
der Zitrusfrucht gewonnenen Saft in den Fruchtsaftsammelbehälter 2 abfliessen zu lassen. Der Fruchtsaftsammelbehälter 2 ist, wie insbesondere aus den Darstellungen
der Figuren 2 und 3 ersichtlich an seiner Umfangsfläche
mit einer Vielzahl abgeblatteter Flächen18 versehen,
welche als Handgriff dienen und das Einstechen bzw.
Einschrauben des Anbohrrohres 1 in die Zitrusfrucht erleichtern. An seinem Innenumfang 19 weist der Saftsammelbehälter eine im wesentlichen glattflächige zylindrische
Wandung auf. Dabei kann im Interesse einer vereinfachten
Fertigung auch vorgesehen sein, daß sich die Konizität
des Anbaurohres 1 bis in den Saftsammelbehälter 2
hinein fortsetzt. Der Saftsammelbehälter 2 ist mit einem
Ausgießschnabel 2o versehen, wie insbesondere aus den
Figuren 1, 2 und 3 ersichtlich ist. In Verbindung mit einem das obere Ende 21des Saftsammelbehälters übergreifenden, verschließbaren Deckel 22 ist dadurch eine
Bevorratung und dosierte Ausgabe des je nach dem Auspreßzustand der Zitrusfrucht 23 aus dieser gewinnbaren Saftes
gewährleistet.

Das erfindungsgemäße Handgerät ist im wesentlichen zum
Nachwürzen von Fisch, Fleisch oder Salaten bei größeren
Tafeln oder in Gasthäusern bestimmt, wo es einerseits
erforderlich ist, die jeweiligen Speisen durch Zugabe
von Saft aus Zitrusfrüchten zu würzen bzw. nachzuwürzen
und andererseits erforderlich ist, einer Reihe aufeinander -
folgender Gäste eine Möglichkeit zum individuellen Nachwürzen von Speisen zu bieten und muß daher so auf dem
Tisch abgestellt werden können, daß im ganz oder teilweisen gefüllten Saftsammelbehälter enthaltener Saft nicht
unbeabsichtigt auslaufen kann. Da erfahrungsgemäß ein
klappbarer Deckel das Auslaufen von im Vorratsbehälter
angesammelten Saft nicht vollständig verhindern kann,
ist nach einem weiteren Merkmal der Erfindung vorgesehen,
daß dem Handgerät eine Abstellschale 24 zugeordnet ist,
die in ihrer Formgebung zunächst spiegelbildlich
zum Fruchtanpreßteller 12 ausgebildet sein kann. Im
gezeigten Ausführungsbeispiel weist die Abstellschale
jedoch im wesentlichen die Form eines Eierbechers auf
und besitzt neben einer die eine Fruchtseite aufnehmenden
Schale 25 eine Abstellplatte 26. Selbstverständlich kann
die Schale 25 auch in der an sich bekannten Weise mit
einer das kippsichere Abstellen der mit einem erfindungsgemäßen Handgerät versehenen Zitrusfrucht gewährleistenden
Aufstandsfläche bzw. einem entsprechenden Aufstandsrand
versehen sein. Wie insbesondere aus den Darstellungen
der Figuren 1 und 2 ersichtlich wird, kann das erfindungsmäße Handgerät einteilig im Spritzgußverfahren sowohl
aus Kunststoff als auch aus einem Metall, vorzugsweise
Aluminium hergestellt werden, zumal im Hinblick darauf,
daß die Zuordnung eines Fruchtanpreßtellers in Folge der
Anwendung eines radialen Kragens 11 nicht unbedingt
erforderlich ist. Sofern das erfindungsgemäße Handgerät
aus einem gegen den Angriff beispielsweise von Zitronensäure

0003956

nicht unbedingt unempfindlichem Material hergestellt wird,
ist erfindungsgemäß vorgesehen, daß es mit einem Schutzüberzug,
beispielsweise einer Verchromung versehen wird.

0003956

P A T E N T A N S P R Ü C H E :

1.) Handgerät zum Gewinnen und dosierten Ausgeben von Fruchtsäften, insbesondere von Zitrusfrüchten, bestehend aus einem über einen Teil seiner Länge hin mit einem Schraubgewinde und radialen Safteintrittsöffnungen versehenen, beidendig offenem Fruchtanbohrrohr, einer am Ende des Anbohrrohres angeordneten Anpreßfläche für die Frucht und einem Saftsammelbehälter, wobei das freie Ende des Fruchtanbohrrohres mit einer axial gerichteten Stirnverzahnung versehen ist, dadurch gekennzeichnet, daß das Fruchtanbohrrohr (1) und der Saftsammelbehälter (2) einteilig und zueinander koaxial ausgebildet sind.

2.) Handgerät nach Anspruch 1, dadurch gekennzeichnet, daß das Fruchtanbohrrohr (1) sich zum Saftsammelbehälter (2) hin erweiternd konisch und der Saftsammelbehälter (2) im wesentlichen zylindrisch gestaltet ist.

3.) Handgerät nach Anspruch 1 und 2, dadurch gekennzeichnet, daß im Übergangsbereich zwischen Anbohrrohr (1) und Saftsammelbehälter (2) ein lediglich eine Windung aufweisendes Schraubgewinde (5) großer Steigung und ein einer Zylinderfläche (9) nachgeschalteter radialer Kragen (11) angeordnet sind.

4.) Handgerät nach Anspruch 1 bis 3, dadurch gekennzeichnet, daß der Durchmesser der Zylinderfläche (9) größer ist als der größte Durchmesser des Fruchtanbohrrohres (1) und zu dessen freiem Ende hin über eine Schrägfläche (1o) abfällt.

5.) Handgerät nach Anspruch 1 bis 4, dadurch gekennzeichnet, daß die einen erweiterten Durchmesser aufweisende Zylinderfläche (9) in Verbindung mit dem ihr nachgeschalteten radialen Kragen (11) eine Einrichtung zum Aufklipsen eines Fruchtanpreßtellers (12) mit einer einen geringfügig geringeren Durchmesser aufweisenden Mittelausnehmung bildet.

0003956

6.) Handgerät nach Anspruch 1 bis 5, dadurch gekennzeichnet, daß das Anbohrrohr (1) im Bereich seiner axial gerichteten Stirnverzahnung (3) durch Verjüngung seiner Wandungsdicke schneidenartig angeschärft ist.

7.) Handgerät nach Anspruch 1 bis 6, dadurch gekennzeichnet, daß das Anbohrrohr (1) in seinem vorderen Bereich (auf die Stirnverzahnung 3 folgenden Bereich) zwei großflächige ovale und einander gegenüberliegend angeordnete Safteintrittsöffnungen (6) aufweist, deren Wandungen (7) tangential zu seiner Achse geneigt sind.

8.) Handgerät nach Anspruch 1 bis 7, dadurch gekennzeichnet, daß am Aussenumfang des Saftsammelbehälters (2) eine Vielzahl zueinander im Winkel stehender, über seine gesamte Höhe hinreichender Flächen (18) ausgebildet ist.

9.) Handgerät nach Anspruch 1 bis 8, dadurch gekennzeichnet, daß der Saftsammelbehälter (2) einen Ausgießschnabel (2o) und einen klappbar angelenkten Deckel (22) aufweist.

1o.) Handgerät nach Anspruch 1 bis 9, dadurch gekennzeichnet, daß es aus Metalldruckguß hergestellt ist.

11.) Handgerät nach Anspruch 1 bis 9, dadurch gekennzeichnet, daß es aus einem Kunststoffmaterial hergestellt und verchromt ist.

12.) Handgerät nach einem oder mehreren der Ansprüche 1 bis 11, gekennzeichnet durch eine unabhängige, mit einer Abstellfläche oder einem Abstellrand versehene Abstellschale, die die freie Seite der auf der anderen Seite das Fruchtanbohrrohr (1) samt Sammelbehälter (2) tragenden Frucht nach Art eines an sich bekannten Eierbechers aufnimmt.

13.) Handgerät nach Anspruch 12, dadurch gekennzeichnet,
daß die Abstellschale (24) spiegelbildlich zum
Fruchtanpreßteller (12) ausgebildet ist.

14.) Handgerät nach einem der Ansprüche 1 bis 11,
bzw. 12 und 13, dadurch gekennzeichnet, daß die
Fruchtanpreßschale (12) wahlweise als Fruchtanpreßschale (12) oder aber als Abstellschale (24)
verwendbar gestaltet ist.

15.) Handgerät nach Anspruch 12 und 13, dadurch gekennzeichnet, daß die Abstellschale (24) eine becherförmige Aufnahmeschale (25) für das freie Ende einer
andernends mit einem erfindungsgemäßen Handgerät
versehenen Zitrusfrucht (23) und eine mit dieser
ein- oder mehrteilig verbundene Abstellfläche (26)
aufweist.

FIG.1

FIG.2

FIG.3

FIG.4